# EUROPÄISCHE PATENTANMELDUNG

(11) **EP 2 213 440 A1**
(43) Veröffentlichungstag der Anmeldung: **04.08.2010**
(21) Anmeldenummer: 09001217.0
(22) Anmeldetag: 29.01.2009
(51) Int. Cl.: B29C 44/32, B29D 23/18, B29C 47/02, B29C 47/12, F16L 11/15, F16L 59/02

(54) **Verfahren zur Herstellung eines wärmeisolierten Leitungsrohres**

(71) Anmelder: Brugg Rohr AG, Holding, 5200 Brugg (CH)
(72) Erfinder: Oeschger, Alfred, 5276 Wil (CH)
(74) Vertreter: Schalch, Rainer

(57) **Zusammenfassung**

Ein wärmeisoliertes Leitungsrohr (22) wird hergestellt, indem ein umschäumtes Innenrohr (2), auf welches ein Aussenrohr (13) aufextrudiert worden ist, nach dem Extruder (12) mit Formwerkzeugen (16-21) bearbeitet wird, um eine tief reichende Wellung zu erzielen. Damit ergibt sich ein Leitungsrohr mit geringem Biegeradius.

## Beschreibung

### Hintergrund

Die Erfindung betrifft ein Verfahren zur Herstellung eines wärmeisolierten Leitungsrohrs, welches mindestens ein Innenrohr, ein im Abstand dazu angeordnetes gewelltes Aussenrohr aus Kunststoff und eine den Raum zwischen Innenrohr und Aussenrohr ausfüllende Schicht aus aufgeschäumtem Kunststoff umfasst, wobei zunächst das Innenrohr umschäumt und auf das umschäumte Innenrohr das Aussenrohr aufextrudiert wird. Ferner betrifft die Erfindung ein wärmeisoliertes, gewelltes Leitungsrohr nach Anspruch 10.

### Stand der Technik

Aus EP-A-0 897 788 ist ein Verfahren gemäss Oberbegriff des Anspruchs 1 bekannt. Dieses Verfahren hat sich bewährt und führt zu wärmeisolierten Leitungsrohren von hoher Qualität. Mit dem Verfahren hergestellte Leitungsrohre werden z.B. in der Nah- und Fernwärmeversorgung oder bei industriellen Anwendungen eingesetzt. Die gemäss EP-A-0 897 788 bei der Umschäumung des Innenrohrs oder der Innenrohre erzeugte Wellung erlaubt beim fertig gestellten Rohr geringe Biegeradien, die je nach Rohrdimension unterschiedlich sind, und die einfache Verlegung ermöglichen. So weist z.B. ein unter der Bezeichnung CALPEX^{®} bekanntes Leitungsrohr für die Wärmeversorgung in einer Dimensionierung mit einem Aussenrohrdurchmesser von 162 mm einen Biegeradius von 1,2 Metern auf. Es kann aber Anwendungen geben, bei denen ein noch geringerer Biegeradius des wärmegedämmten Leitungsrohr gewünscht ist.

### Darstellung der Erfindung

Der Erfindung liegt die Aufgabe zu Grunde ein wärmegedämmtes Leitungsrohr und dessen Herstellungsverfahren zu verbessern.

Dies wird bei dem eingangs genannten Verfahren dadurch erreicht, dass nach abgeschlossener Extrusion mittels Formwerkzeugen die gewellte Form erzeugt wird.

Es hat sich gezeigt, dass auf diese Weise bei dem speziellen Verbund aus Innenrohr, geschäumter Wärmedämmung und Aussenrohr mit den Wellentälern eine tief in das Leitungsrohr reichende Wellung im Aussenrohr und der Wärmedämmung einbringbar ist, die eine erhöhte Biegbarkeit ergibt. Die tiefe Wellung wird durch die Formwerkzeuge in das Leitungsrohr eingepresst. Dies erfolgt bevorzugt anschliessend an die Extrusion des Aussenrohrs, nach welcher das Leitungsrohr eine Temperatur aufweist, welche die plastische Verformung mit den Formwerkzeugen erlaubt. Es kann aber auch eine spätere Einbringung der tiefen Wellung in einem separaten Herstellungsschritt erfolgen, für welchen das Leitungsrohr durch Heizmittel auf eine Temperatur gebracht wird, welche das Einpressen der Wellung erlaubt.

Es kann eine erste Wellung bereits bei der geschäumten Wärmedämmung erzeugt werden, wie in EP-A-0 897 788 beschrieben, wobei die Formgebung nach der Extrusion gemäss der vorliegenden Erfindung diese erste Wellung umformt und vertieft. Es kann aber auch ein glatt geschäumtes und mit einem glatten Aussenrohr extrudiertes Rohr gemäss der vorliegenden Erfindung mit der Wellung versehen werden. Das Vorgehen gemäss der ersten Variante, bei welcher also die Formung nach dem Extruder an einem bereits gewellten Leitungsrohr erfolgt, ist bevorzugt, da die Wellung bei der Schäumung und die nachfolgende Extrusion des Aussenrohrs auf dieser erste Wellung in der Regel eine erhöhte Materialdicke des Aussenrohrs in den Wellentälern ergibt. Diese steht dann für die tiefer reichende zweite Wellung mit den Formwerkzeugen nach dem Extruder zur Verfügung, so dass auch bei einer tiefen Wellung keine Fehlstellen im Aussenrohr entstehen. Es kann dabei eine Ermittlung der ersten Wellung erfolgen, insbesondere vor dem Extruder, und eine darauf abgestimmte Positionierung der Formwerkzeuge für die tiefe Wellung.

Bevorzugt ist die Welltiefe gleich oder grösser als 4 mm und ist damit mindestens 33% grösser als bei dem erwähnten CALPEX^{®} Leitungsrohr, welches nach Stand der Technik hergestellt wird. Besonders bevorzugt ist eine Welltiefe von 4 bis 10 mm. Es lassen sich gemäss der Erfindung im Wesentlichen U-förmige Wellentäler erzeugen, die insbesondere durch eben verlaufende Oberseitenabschnitte voneinander getrennt sind. Es ergibt sich mit dieser Formgebung eine gute Materialverteilung des Aussenrohrmaterials bei der Formgebung nach der Extrusion.

Die Aufgabe wird ferner mit einem Leitungsrohr gemäss Anspruch 10 gelöst.

### Kurze Beschreibung der Zeichnungen

Im Folgenden werden Ausführungsbeispiele der Erfindung anhand der Zeichnungen näher erläutert. Dabei zeigt
Figur 1 schematisch eine Anlage zur Durchführung des Verfahrens;
Figur 2 schematisch die Erzeugung der gewellten Endform; und
Figur 3 eine teilweise geschnittene Darstellung einer bevorzugten Ausführungsform des Leitungsrohrs.

### Wege zur Ausführung der Erfindung

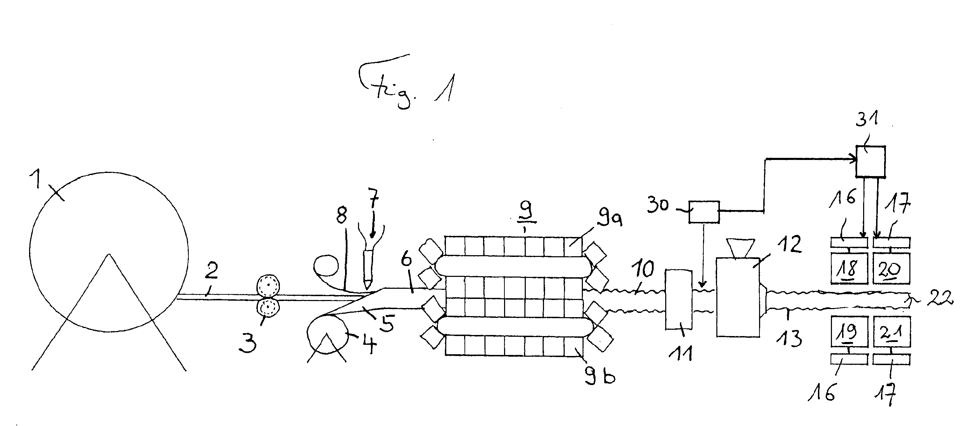

Figur 1 zeigt ab der Vorratsrolle 1 bis und mit zum Extruder 12 die aus EP-A-0 897 788 bekannte Anordnung zur Herstellung eines wärmeisolierten Leitungsrohres. Dabei wird ein Innenrohr 2 von der Vorratstrommel 1 kontinuierlich abgezogen. Die Mittel zum Abziehen bzw. Fördern in Fertigungsrichtung sind dabei nicht gezeigt, da solche Mittel dem Fachmann bekannt sind. Das Innenrohr kann ein Kunststoffrohr oder auch ein Metallrohr sein und es kann glatt oder gewellt sein. Insbesondere findet ein Innenrohr 2 aus vernetztem Polyethylen Verwendung. Das Innenrohr 2 kann durch ein Kaliberrollenpaar 3 geführt werden, dessen Rollen angetrieben sind. Das Kaliberrollenpaar 3 ist vorzugsweise in zwei senkrecht aufeinander stehenden Richtungen quer zur Fertigungsrichtung bzw. Abzugsrichtung verschiebbar.

Von einer Vorratsspule 4 wird eine Kunststofffolie 5, insbesondere eine Polyethylenfolie abgezogen und um das Innenrohr 2 konzentrisch zu diesem zu einem Schlitzrohr mit einer verklebten oder verschweissten Längsnaht geformt. In das noch offene Schlitzrohr 6 wird ein aufschäumbares Kunststoffgemisch eingebracht, insbesondere auf Polyurethanbasis oder auf Polyethylenbasis und z.B. mit der Düse 7. Das geschlossene Schlitzrohr wird in ein Formwerkzeug 9 eingeführt, welches aus einer Vielzahl von Formhälften 9a und 9b gebildet ist, die gemeinsam eine "wandernde Form" für das mit der Isolierschicht unter Folie 5 versehene Innenrohr bilden.

Die der Folie 5 bzw. dem Schlitzrohr 6 zugewandten Oberflächen der Formhälften 9a und 9b können ein Wellenprofil aufweisen, in welches die Folie 5 infolge des Schäumdruckes eingeformt wird. In diesem Fall, der in der Figur dargestellt ist, weist das aus dem Formwerkzeug 9 austretende Rohr 10 eine gewellte Oberfläche auf. Die der Folie 5 zugekehrten Oberflächen der Formhälften 9a und 9b können aber auch glatt ausgebildet sein. Das aus dem Formwerkzeug 9 austretende Rohr 10 weist in diesem Falle eine glatte Oberfläche auf. In diesem Fall könnte das Formwerkzeug 9 auch durch eine stillstehende hohlzylindrische Form ersetzt werden.

Das Rohr 10 kann danach die aus EP-A-0 897 788 bekannte Röntgenstrahleinrichtung 11 durchlaufen, mit deren Hilfe das Rohr 10 kontinuierlich auf eine exakt zentrische Lage des Innenrohres überprüft wird.

Im nächsten Herstellungsschritt wird auf das Rohr 10 mittels eines Extruders 12 das Aussenrohr 13 aus Kunststoff aufextrudiert. Es wird dabei auf bekannte Weise ein Vakuum erzeugt, das das Anliegen des Aussenrohrs am geschäumten Rohr 10 bewirkt. Im Falle des gewellten Rohres 10 legt sich das Aussenrohr 13, welches auch als Aussenmantel bezeichnet werden kann, an die Wellung des Rohres an. Im Falle des glatten Rohres 10 legt sich der Aussenmantel um das glatte Rohr und ist dann ebenfalls glatt. Der Aussenmantel verklebt dabei aufgrund seiner durch die Extrusion erhaltenen hohen Temperatur mit der Kunststofffolie 5.

Bevorzugt wird nun in der Herstellungsabfolge des Leitungsrohrs direkt auf den Extrusionsschritt folgend die Tiefenwellung in das Leitungsrohr eingebracht, so dass sich eine kontinuierliche Herstellung ergibt. Die Tiefenwellung erfolgt durch ein Einpressen der Wellform in das Leitungsrohr. Dies erfolgt z.B. so, dass in einem Abstand vom Extruder 12, der z.B. 3-4 m betragen kann, durch Formwerkzeuge 16-21 die tiefe Wellung gemäss der vorliegenden Erfindung eingebracht wird. Diese Einbringung erfolgt in das mit dem Aussenrohr 13 versehene Rohr 10, welches aufgrund der Prozesswärme durch das Schäumen und das Extrudieren noch verformbar ist. Es kann die Prozesswärme der vorangehenden Herstellungsschritte des Umschäumens und des Extrudierens ausgenützt werden bzw. es kann durch Heizmittel oder Kühlmittel sicher gestellt werden, dass das Rohr 10, 13 beim Eintritt in die Formwerkzeuge noch eine Temperatur aufweist, welche das Einpressen der tiefen Wellung in das Leitungsrohr erlaubt. Die Temperatur hängt vom Kunststoffmaterial des Leitungsrohrs ab und ist somit für den Fachmann einfach bestimmbar oder durch Versuche ermittelbar. Die zur Einbringung der tiefen Wellung verwendeten Formwerkzeuge können z.B. endlose, mitlaufende Formwerkzeuge sein, wie sie für das Formwerkzeug 9 bei der Umschäumung dargestellt worden sind oder andere dem Fachmann bekannte Formwerkzeuge. Ein Beispiel für andere Formwerkzeuge wird nachfolgend erläutert.

Die Einpressung der tiefen Wellung mittels Formwerkzeugen kann auch in einem separaten Herstellungsschritt erfolgen, nachdem das extrudierte Leitungsrohr abgekühlt und zwischengelagert worden ist, so dass sich eine diskontinuierliche Herstellung ergibt. Dies erfordert dann aber ein Aufheizen des Leitungsrohrs von der Lagerungstemperatur auf diejenige Temperatur, die das Einpressen der tiefen Wellung erlaubt.

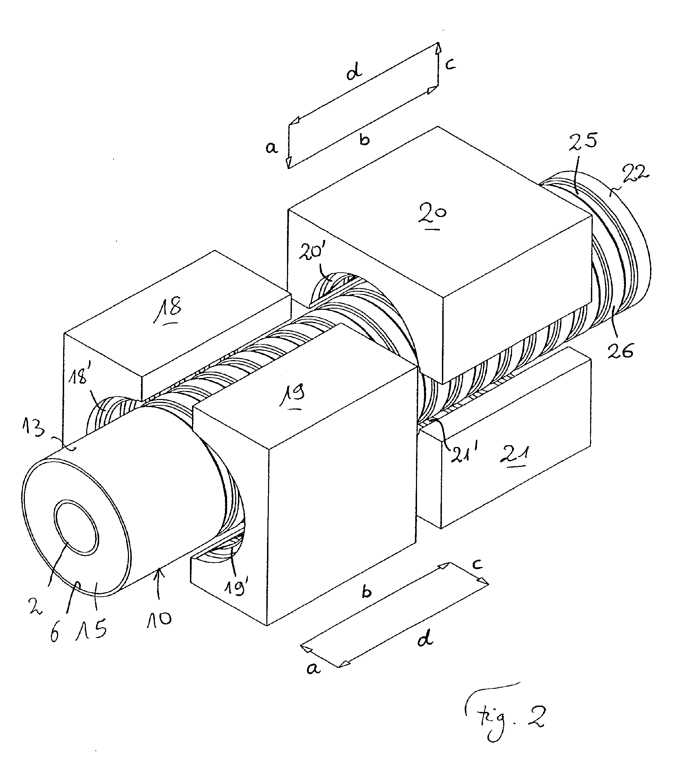

Es wird nachfolgend ein Beispiel für das Einbringen der tiefen Wellung mit Formwerkzeugen gemäss den Figuren 1 und 2 beschrieben. Ein erstes Paar Formhälften 18 und 19 der Formwerkzeuge ist dabei mit Antriebsmitteln 16 versehen, welche die nachfolgend beschriebenen Bewegungen der Formhälften 18 und 19 bewirken. Für die Formhälften 20 und 21 sind die Antriebsmittel 17 vorgesehen. Die Antriebsmittel 16 und 17 können pneumatisch, hydraulisch oder elektromotorisch oder auf andere Weise ausgestaltet sein. Die konkrete Ausgestaltung dieser Antriebsmittel ist für den Fachmann aufgrund der nachfolgend geschilderten Bewegungsanforderungen eine fachmännische Massnahme und wird hier nicht weiter beschrieben. Nach dem Verlassen der Formhälften 20 und 21 ist das Leitungsrohr fertig geformt. Es kann durch eine nicht gezeigte Kühlstation geführt werden und kann durch einen Bandabzug abgezogen und auf eine Trommel aufgewickelt werden.

Figur 2 zeigt die Formwerkzeughälften 18-21 ohne die Antriebsmittel. Die durch diese verursachten Bewegungen der Formhälften sind mit den Pfeilen A-D dargestellt. Das Rohr 10 mit dem Innenrohr 2, der aufgeschäumten Kunststoffisolation 15, welche an ihrer Aussenseite den Folienschlauch 6 aufweist und das darauf extrudierte Aussenrohr 13 ist in der Figur so ersichtlich, wie es aus dem Extruder 12 ausgetreten ist. In diesem Fall ohne Wellung als glattes Rohr. Die Formhälften 18 und 19 bringen nun mit ihren nur teilweise ersichtlichen Formstücken 18' und 19' von den beiden Seiten des Rohres her die Tiefenwellung in dieses ein, während die Formhälften 20 und 21 mit ihren nur teilweise ersichtlichen Formstücken 20' und 21' die Tiefenwellung von oben und von unten her einbringen. Die Formen sind dabei so dimensioniert, dass sich rundherum eine gleichmässige Tiefenwellung für das Leitungsrohr 22 ergibt. Dabei wird so vorgegangen, dass die Formhälfte 19 in Richtung des Pfeiles a angetrieben wird und die Formhälfte 18 in Gegenrichtung des Pfeiles a angetrieben wird, so dass sich die Formhälften schliessen und die entsprechende Formung des noch heissen und verformbaren Rohrs 10 bewirken. Die sich schliessenden und geschlossenen Formhälften 18 und 19 fahren dabei in Richtung des Pfeiles b mit der Fertigungsgeschwindigkeit des aus dem Extruder austretenden Rohrs 10 mit. Ist der entsprechende Verfahrweg ausgeführt, was z.B. nach 3 Sekunden bis 5 Sekunden oder mehr Verweilzeit des Rohrs 10 in der Form der Fall sein kann, so fahren die Formhälften 19 und 18 am Ende des Verfahrweges b wieder auseinander, was für die Formhälfte 19 eine Bewegung in Richtung des Pfeiles c bedingt und für die Formhälfte 18 eine entgegengesetzte Bewegung. Die Figur 2 zeigt diese Stellung des Auseinanderfahrens der Formhälften 18 und 19. Durch diese sind die seitlichen Bereiche des Rohrs 13 geformt worden. Entgegen der Darstellung in der Zeichnung sind die oberen und unteren Bereiche des Rohrs 13 noch nicht geformt, in der Zeichnung ist dies aber abweichend dargestellt, damit die Formung durch die Formhälften grundsätzlich besser ersichtlich ist. Die obere und untere Formung erfolgt erst durch die Formhälften 20 und 21, welche nachfolgend beschrieben werden. Von der gezeigten Stellung der Formhälften 18 und 19 erfolgt ein Verfahren in Richtung des Pfeiles d, wobei dies mit höherer Geschwindigkeit erfolgt als der Fertigungsgeschwindigkeit des Leitungsrohrs 22 entspricht. Die Formhälften 18 und 19 fahren dabei soweit in Richtung d, dass beim nächsten Schliessen in Richtung des Pfeiles a bzw. in Gegenrichtung die noch unverformten seitlichen Abschnitte des Rohrs geformt werden. Es kann vorgesehen sein dass dabei immer die in Fertigungsrichtung erste Wellenstufe der Form genau in die zuletzt geformte Welle eingreift.

Das Formwerkzeug mit den Formhälften 20 und 21, welche ober- und unterseitig die Wellung ausbilden, arbeitet auf dieselbe Weise. Es erfolgt ein Schliessen in Richtung des Pfeiles a bzw. in Gegenrichtung, so dass die beiden Formhälften 20 und 21 die geschlossene Form ausbilden. Dann erfolgt das Verfahren in Richtung des Pfeiles b während derselben Verweilzeit wie für die Formhälften 18 und 19. Danach erfolgt das Entformen in Richtung des Pfeiles c bzw. in Gegenrichtung und das rasche Zurückfahren der beiden Formhälften in Richtung des Pfeiles d. Diese Bewegungen erfolgen natürlich synchronisiert mit den Bewegungen der Formhälften 18 und 19, so dass alle Formhälften zusammen das Verfahren in Richtung der Pfeile b ausführen bzw. zusammen das rasche Rückfahren in Richtung der Pfeile d.

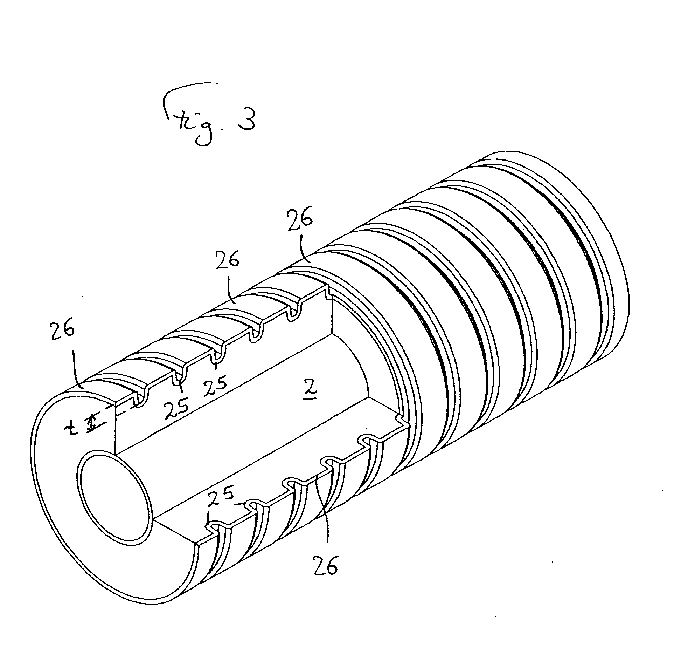

Figur 3 zeigt ein entsprechend geformtes fertig hergestelltes Leitungsrohr 22, wobei gleiche Bezugszeichen wie anhin verwendet gleiche Teile bezeichnen. Es ist die Wellung mit den Wellentälern 25 und den dazwischen liegenden Oberseiten 26 ersichtlich. Bevorzugt ist die dargestellte Formgebung, bei welcher die Wellentäler 25 im Wesentlichen U-förmig sind und die Oberseiten 26 im Wesentlichen eben sind. Auch andere Formgebungen sind möglich. Die Tiefe t des Wellentales, welche im Querschnitt von Figur 3 ersichtlich ist, beträgt von der Oberseite 26 des Leitungsrohrs her gesehen bevorzugt 4 mm oder mehr. Insbesondere ist ein Bereich von 4 -10 mm bevorzugt. Eine solche tiefe Wellung lässt sich mit Formwerkzeugen in das Leitungsrohr einpressen und führt zu einer sehr guten Biegbarkeit des Leitungsrohres. Dies kann auf die zuvor geschildere Weise erfolgen. Bevorzugt ist dabei das Rohr 10 bereits vor dem Extruder 12 auf die erläuterte bekannte Weise gewellt worden ist, so dass der in Figur 2 links vor den Formhälften 18 und 19 ersichtliche Abschnitt des Rohrs 13 eine Wellung aufweisen würde, welche indes weniger tief ist als die mit den Formwerkzeugen 18-21 erzeugte Wellung. Die Wellentäler 25 werden dann bevorzugt dort eingebracht, wo bereits die Wellentäler aufgrund der Formwerkzeuge 9 erzeugt worden sind.

Das die Einbringung der tiefen Wellung jeweils genau in einem Wellental des zuvor gewellten Leitungsrohrs erfolgt, kann bevorzugt dadurch sicher gestellt werden, dass eine Erfassungseinrichtung vorgesehen ist, welche vor den Formwerkzeugen die bestehende Wellung erfasst und die Formwerkzeuge so steuert, dass diese die Einpressung der tiefen Wellung abgestimmt auf die vorgängige Wellung erzeugen. In Figur 1 ist dies als Beispiel so dargestellt, dass eine Erfassungseinrichtung 30 die Wellung erfasst, in diesem Beispiel bereits die Wellung des geschäumten Rohrs 10 vor dem Extruder. Dies kann z.B. optisch oder durch Ultraschall durch die Feststellung der Wellentäler erfolgen, z.B. durch eine Distanzmessung, oder kann auch mechanisch erfolgen. Die Position des jeweiligen Wellentals (oder alternativ oder zusätzlich des Wellenbergs) kann dann als Eingabewert an die Steuerung 31 der Formwerkzeuge gegeben werden. Diese steuert die Antriebsmittel 16, 17 der Formwerkzeuge derart, dass das Einpressen der tiefen Wellentäler durch die Formwerkzeuge exakt an der Stelle der Wellentäler des vorgewellten Leitungsrohrs 10 erfolgt.

## Patentansprüche

1. Verfahren zur Herstellung eines wärmeisolierten Leitungsrohrs (22), welches mindestens ein Innenrohr (2), ein im Abstand dazu angeordnetes gewelltes Aussenrohr (13) aus Kunststoff und eine den Raum zwischen Innenrohr und Aussenrohr ausfüllende Schicht (15) aus aufgeschäumtem Kunststoff umfasst, wobei zunächst das Innenrohr (2) umschäumt und auf das vom umschäumten Innenrohr gebildete Rohr (10) das Aussenrohr (13) aufextrudiert wird, **dadurch gekennzeichnet, dass** nach abgeschlossener Extrusion mittels Formwerkzeugen (16-21) die gewellte Form (25, 26) erzeugt wird.

2. Verfahren nach Anspruch 1, **dadurch gekennzeichnet, dass** die gewellte Form durch die Formwerkzeuge in das Leitungsrohr eingepresst wird.

3. Verfahren nach Anspruch 1 oder 2, **dadurch gekennzeichnet, dass** die gewellte Form direkt anschliessend an die Extrusion des Aussenrohrs (13) erzeugt wird.

4. Verfahren nach einem der Ansprüche 1 bis 3, **dadurch gekennzeichnet, dass** die Tiefe (t) der Wellung gleich oder grösser als 4 mm ist und insbesondere 4 bis 10 mm beträgt.

5. Verfahren nach einem der Ansprüche 1 bis 4, **dadurch gekennzeichnet, dass** das Tal (25) der Wellenform im Wesentlichen U-förmig ist.

6. Verfahren nach einem der Ansprüche 1 bis 5, **dadurch gekennzeichnet, dass** die Oberseite (26) der Wellenform zwischen den Tälern im Wesentlichen eben ist.

7. Verfahren nach einem der Ansprüche 1 bis 6, **dadurch gekennzeichnet, dass** die Formwerkzeuge Formhälften (18-21) umfassen, welche zyklisch während der Erzeugung der Wellenform mit der Fertigungsgeschwindigkeit des Leitungsrohrs (22) mitlaufen und nach der Entformung mit höherer Geschwindigkeit in Gegenrichtung zurückfahren.

8. Verfahren nach einem der Ansprüche 1 bis 7, **dadurch gekennzeichnet, dass** eine erste Wellenform bei der Umschäumung des Innenrohres (2) gebildet wird, so dass das aufextrudierte Aussenrohr (13) die erste Wellenform aufweist, wonach mittels der Formwerkzeuge nach abgeschlossener Extrusion eine zweite gewellte Form (25, 26) erzeugt wird, wobei die Wellentäler (25) der zweiten Form im Bereich der Wellentäler der ersten Form erzeugt werden.

9. Verfahren nach Anspruch 8, **dadurch gekennzeichnet, dass** durch ein Erfassungsmittel (30) die erste Wellenform erfasst und durch ein auf ein Ausgangssignal der Erfassungsmittel ansprechendes Steuermittel (31) das Einbringen der zweiten Wellenform auf die erste Wellenform abgestimmt wird.

10. Wärmeisoliertes, gewelltes Leitungsrohr (22), insbesondere herstellbar mit dem Verfahren nach einem der Ansprüche 1 bis 9, mit mindestens einem Innenrohr (2), einer geschäumten Isolationsschicht (15) und einem gewellten Aussenrohr (13) aus Kunststoff, **dadurch gekennzeichnet, dass** die Tiefe (t) der Wellung gleich oder grösser 4 mm ist und insbesondere 4 bis 10 mm beträgt.

11. Leitungsrohr nach Anspruch 10, **dadurch gekennzeichnet, dass** das Tal (25) der Wellenform eine im Wesentlichen U-förmige Querschnittsform aufweist und die Oberseite (26) der Wellenform im Wesentlichen eben ist.
